# EUROPEAN PATENT SPECIFICATION

(11) **EP 4 061 626 B1**
(45) Date of publication and mention of the grant of the patent: **07.05.2025**
(21) Application number: 20804688.8
(22) Date of filing: 05.11.2020
(51) Int. Cl.: B29D 30/26

(54) **PROCESS AND APPARATUS FOR BUILDING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE CONSTRUCTION DE PNEUS POUR ROUES DE VÉHICULE

(30) Priority: 19.11.2019 IT 201900021609
(43) Date of publication of application: 28.09.2022
(73) Proprietor: Pirelli Tyre S.p.A., 20126 Milano (IT)
(72) Inventor: DE COL, Christian, 20126 Milano (IT); PORTINARI, Gianni Enrico, 20126 Milano (IT)
(74) Representative: Tansini, Elio Fabrizio
(86) International application number: PCT/IB2020/060407
(87) International publication number: WO 2021/099871

(56) References cited:
- EP-A1- 0 449 587
- EP-A1- 2 386 406
- EP-A1- 3 006 194
- WO-A1-2010/021546
- WO-A1-2015/015336
- WO-A1-2016/005852
- WO-A1-2018/231056
- JP-A- 2011 240 691
- US-A1- 2010 000 662

## Description

The present invention regards a process and an apparatus for building tyres for vehicle wheels.

In particular, the invention can be conveniently employed for improving the coupling of a carcass sleeve with an outer sleeve during the building of a tyre.

A tyre for vehicle wheels generally comprises a carcass structure comprising at least one carcass ply having respectively opposite end flaps engaged with respective anchoring annular structures, integrated in the zones normally identified with the name "beads", having an internal diameter substantially corresponding to a so-called "fitting diameter" of the tyre on a respective mounting rim. The carcass structure is associated with a belt structure which can comprise one or more belt layers, situated in radial superimposition with respect to each other and with respect to the carcass ply, having textile or metallic reinforcement cords with cross orientation and/or orientation substantially parallel to the circumferential extension direction of the tyre (at 0 degrees). In radially outer position with respect to the belt structure, a tread band is applied, also made of elastomeric material like other semifinished product constituents of the tyre.

Respective sidewalls made of elastomeric material are also applied in axially outer position on the lateral surfaces of the carcass structure, each extended from one of the lateral edges of the tread band up to the respective anchoring annular structure at the beads. In the tyres of "tubeless" type, an air impermeable coating layer - normally termed "liner" - covers the inner surfaces of the tyre.

The building of a green tyre essentially provides that the carcass ply/plies, the anchoring annular structures and/or other components of the carcass structure are made and/or mutually assembled on a building drum to form a so-called "carcass sleeve" having substantially cylindrical shape.

The carcass sleeve is then shaped according to a toroidal configuration, in order to be coupled with a so-called "outer sleeve", previously attained by making and/or assembling together the belt layers, the tread band and/or other components. Also known are building processes, of the type termed "single-step", in which the action of shaping the carcass sleeve for the purpose of the assembly with the outer sleeve is executed by axially approaching two axially opposite half parts of the building drum, such that the assembly can be completed without having to remove the carcass sleeve from the building drum.

Other building processes, of the type termed "two-step", require the use of a so-called shaping drum, used for the purpose of coupling the carcass sleeve with the outer sleeve. In these processes, it is required that the carcass sleeve made on the building drum be transferred on the shaping drum for the execution and assembly with the outer sleeve.

Following the building of the green tyre actuated by assembly of respective components, a moulding and vulcanisation treatment is generally executed, aimed to determine the structural stabilisation of the tyre by cross-linking the elastomeric compositions as well as to imprint thereon, if requested, a desired tread design and possible distinctive graphic marks at the sidewalls of the tyre.

The term "axial" and the expression "axially inner/outer" are used with reference to the axial direction of the rotation axis of a tyre, of a carcass sleeve or of an outer sleeve, as well as of a building drum or of a shaping drum employed during the building. The terms "radial" and "axial" and the expression "radially inner/outer" are used with reference to the radial direction (i.e. to a direction perpendicular to the respective rotation axis) of a tyre, of a carcass sleeve or of an outer sleeve, as well as of a building drum or of a shaping drum employed during the building. A radial plane of the tyre, of a carcass sleeve or of an outer sleeve, as well as of a building drum or of a shaping drum contains the respective rotation axis thereof.

US 5,861,079 describes an apparatus for building tyres, comprising a transfer ring for a carcass sleeve or a belt ring having gripping elements that are circumferentially spaced and radially movable in order to come into contact with the carcass or the belt. WO2008007398, in the name of the same Applicant, describes a process in which a tyre is built on a toroidal support, having an outer shaping surface coinciding with the inner shape of the finished tyre. Before proceeding with the vulcanisation of the tyre, the beads thereof are moulded, shutting each between the toroidal support and an annular restraining portion axially opposed to the toroidal support itself. The restraining portions keep the beads of the tyre shut during the transfer thereof with the toroidal support within a vulcanisation mould and during the vulcanisation.

WO2008007400, in the name of the same Applicant, describes a process in which a green tyre is removed from a building drum and transferred into a moulding and prevulcanisation station, in which the beads are each shut between two restraining surfaces in order to be moulded and prevulcanised. The beads are maintained shut between the restraining surfaces during the transfer of the tyre within a vulcanisation mould and during the vulcanisation.

Additional examples of two-step tyre building processes are provided by WO 2018/231056 A1, EP 2386406 A1 and JP 2011-240591 A.

The Applicant has observed that in the two-step building processes, the quality of the final product in terms of geometric and structural precision, balancing of the masses, repetitiveness of the results, can be lower than the expectations. On such matter, the Applicant deems that in the two-step building processes, a critical aspect in terms of final product quality is represented by the need to remove the carcass sleeve from the building drum and engage it on the shaping drum for the execution of the assembly. In particular, the Applicant has observed that when the building drum is removed from the carcass sleeve, the latter tends to be deformed due to the force of gravity and/or internal tensions present in the components of the tyre, altering the geometric configuration previously set thereto during the building on the building drum.

These deformations can be in part corrected when the carcass sleeve is engaged on the shaping drum, but the initial shape of the carcass sleeve is not always restored in a sufficiently precise manner. It follows that the coupling of the carcass sleeve with the outer sleeve can occur in a non-optimal manner, and/or in the presence of deformations or distortions that can affect the final product.

The Applicant has however perceived that by suitably supporting the carcass sleeve during the steps of removal of the building drum and coupling with the shaping drum, it is possible to suitably oppose undesired structural distortions thereof and achieve significant qualitative improvements.

More particularly, it was found that by engaging and retaining the carcass sleeve at the beads during the removal from the building drum and the transfer thereof to the shaping drum, it is possible to obtain an improved centring of the carcass sleeve, effectively obstructing undesired structural distortions thereof.

In a first aspect thereof, the invention thus regards a process for building tyres for vehicle wheels, according to claim 1.

According to a further aspect, the invention regards an apparatus for building tyres for vehicle wheels, according to claim 9.

The Applicant deems that the retention action exerted on the beads allows fixing the mutual positioning thereof even when, following the contraction of the building drum, there is no more mechanical support action exerted thereby on the carcass sleeve. The positioning stability of the beads prevents deformations and distortions due to internal tensions or due to the weight of the components, and arranges the carcass sleeve in optimal conditions for a subsequent engagement with the shaping drum.

Also preserved is an easy introduction and extraction of the building drum and of the shaping drum with respect to the carcass sleeve itself, both for the purpose of transfer of the carcass sleeve on the shaping drum, and for the purpose of the removal of the shaping drum carrying the carcass sleeve for the subsequent step of assembly with an outer sleeve.

In one of the aforesaid aspects, the present invention can also comprise one or more of the following preferred characteristics.

Preferably, before contracting the building drum, an action of retaining the carcass sleeve is actuated by means of a retention action distributed on a radially outer surface thereof.

The retention action on the radially outer surface assists the retention of the beads by the coupling elements, so as to facilitate an effective maintenance of the shape of the carcass sleeve in the absence of the building drum. Undesired distortions of the carcass sleeve are in fact prevented, for example due to internal tensions in the components of the carcass sleeve itself and/or due to the weight.

Preferably, the action of retaining the carcass sleeve is maintained during at least one part of the action of engaging the carcass sleeve on the shaping drum.

Preferably, retaining the carcass sleeve comprises placing a plurality of retaining elements against the radially outer surface of the carcass sleeve.

Preferably, retaining the carcass sleeve comprises fixing said radially outer surface against the retaining elements by means of attraction actions towards the retaining elements themselves.

Preferably, gripping each bead comprises radially translating the coupling elements of each gripping member towards said alignment axis, to position gripping protrusions of the coupling elements themselves at a smaller diameter than an internal diameter of the beads.

Preferably, gripping each bead comprises axially translating the coupling elements towards the carcass sleeve, to position the gripping protrusion of each coupling element in a position radially aligned with the respective bead.

Preferably, gripping each bead comprises radially translating the coupling elements away from the alignment axis, to bring the gripping protrusion of each coupling element against a radially inner edge of the respective bead.

Preferably, gripping each bead comprises radially translating the coupling elements of each gripping member towards said alignment axis, to position gripping protrusions of the coupling elements themselves in axial alignment with an undercut defined along an axially outer circumferential edge of the respective bead. Preferably, gripping each bead comprises axially translating the coupling elements towards the carcass sleeve, to position the gripping protrusion of each coupling element in engagement relationship with said undercut.

Preferably, the building drum is axially extracted with respect to the gripping members, after the action of contracting the building drum.

Preferably, the action of engaging the carcass sleeve on the shaping drum comprises axially inserting the shaping drum in a position coaxially centred in the carcass sleeve retained by the gripping members.

Preferably, the action of engaging the carcass sleeve on the shaping drum comprises radially expanding annular shoulders carried by each of two axially opposite half parts of the shaping drum, from a contracted condition in which a maximum diameter of the annular shoulders is smaller than an internal diameter of the beads, to an expanded condition in which said maximum diameter is greater than the internal diameter of the beads.

Preferably, the action of engaging the carcass sleeve on the shaping drum comprises moving the annular shoulders axially away from each other in the expanded condition, in order to carry each of them against an axially inner wall of one of the beads.

Preferably, the action of engaging the carcass sleeve on the shaping drum comprises radially expanding annular gripping elements carried by each of two axially opposite half parts of the shaping drum, from a contracted condition in which a maximum diameter of the annular gripping elements is smaller than an internal diameter of the beads, to an expanded condition in which each annular gripping element operates in radial thrust relationship against a radially inner edge of one of the beads.

Preferably, the action of retaining the carcass sleeve is maintained at least until completion of the action of moving the annular shoulders axially away from each other in the expanded condition. Preferably, before radially expanding the annular gripping elements, said coupling elements are disengaged from the beads. Preferably, disengaging the coupling elements from the beads comprises axially translating the coupling elements away from the carcass sleeve, to position each gripping protrusion in axially outer position with respect to the respective bead.

Preferably, disengaging the coupling elements from the beads comprises radially translating the coupling elements away from the alignment axis, to position the gripping protrusions according to a minimum diameter greater than a maximum diameter presented by the carcass sleeve.

Preferably, disengaging the coupling elements from the beads also comprises radially translating the coupling elements towards the alignment axis in order to space each gripping protrusion from the radially inner surface of the respective bead, before axially translating the coupling elements away from the carcass sleeve.

Preferably, each gripping member also comprises at least one actuator, carried by the annular support and operating on one or more of the coupling elements to move them radially with respect to the alignment axis between a contracted condition and an expanded condition.

Preferably, said actuator comprises a first cylinder active on the support stem, and an additional cylinder operating against a contrast bracket rigidly carried by the annular support.

Preferably, the first cylinder and the additional cylinder are mechanically connected in series to selectively position the coupling element in the contracted condition, in the expanded condition, and in an intermediate condition between the contracted condition and the expanded condition.

Preferably, when the coupling element is in the intermediate condition the first cylinder and the additional cylinder are each in a respective limit stop condition.

Preferably, the radial positioning of the coupling element in the intermediate condition is mechanically determined by limit stops in both the first cylinder and the additional cylinder.

In such a manner, greater precision in the positioning of the coupling elements in the intermediate position is obtained.

Preferably, the conveyor also comprises at least one axial movement device for axially translating the coupling elements of the gripping members in mutual approaching and moving away.

Preferably, the axial movement device operates on the annular supports of the gripping members.

Preferably, the axial movement device comprises at least one actuator, carried by a central support ring axially arranged between the gripping members.

Preferably, radially outer retaining elements are also provided for, distributed according to a substantially cylindrical area of action between the gripping members and activatable to retain a radially outer surface of the carcass sleeve.

Preferably, the retaining elements comprise suction cups activatable through a suction circuit.

Preferably, the retaining elements are carried by arms axially overhanging from the annular support of each gripping member towards the other gripping member.

Preferably, each of the retention elements is movable radially towards and away from the alignment axis.

Preferably, each of the retention elements is engaged with the respective arm by means of a radial movement actuator.

Preferably, the shaping drum comprises two half parts that are axially movable with respect to each other.

Preferably, each half part comprises a radially expandable annular shoulder.

Preferably, each half part comprises a radially expandable annular gripping element, arranged in axially outer position with respect to said annular shoulder.

Preferably, the annular shoulder of each half part has an axial thrust surface facing axially away from the other half part of the shaping drum.

Preferably, the annular shoulder of each half part comprises a plurality of circumferentially distributed and radially movable abutment sectors.

Preferably, the annular gripping element of each half part comprises a plurality of circumferentially distributed and radially movable expansion sectors.

Preferably, the annular gripping element of each half part also comprises an elastomeric ring fit around the expansion sectors and having a radially outer thrust surface.

Further characteristics and advantages will be clearer from the detailed description of a preferred but not exclusive embodiment of a process and an apparatus for building tyres for vehicle wheels, in accordance with the present invention. Such description will be set forth hereinbelow with reference to the enclosed drawings, provided only as a non-limiting example, in which:
- figure 1 schematically shows a side view of the apparatus according to the present invention integrated in a plant for building tyres;
- figure 2 shows a perspective view of a building drum carrying a carcass sleeve, arranged in a relationship of axial alignment with a conveyor;
- figure 3 shows, in an interrupted perspective view, a particular structure of the conveyor of figure 2;
- figure 4 shows, partially in diameter section, the building drum carrying the carcass sleeve, inserted coaxially and in axially centred position in the conveyor;
- figure 5 shows an operating step subsequent to figure 4, in which coupling elements were radially approached to an alignment axis;
- figure 6 shows an operating step subsequent to figure 5, in which the coupling elements were radially approached to the beads of the carcass sleeve;
- figure 7 shows an operating step subsequent to figure 6, in which retaining elements are brought against the radially outer surface of the carcass sleeve, while the coupling elements were radially moved away in order to engage the beads;
- figure 8 shows an operating step in which the building drum is radially contracted in order to be removed by the transfer, while the retaining elements operate against the radially outer surface of the carcass sleeve, and the coupling elements retain the beads;
- figure 9 shows an operating step in which a shaping drum, arranged in a radially contracted condition, was coaxially inserted in axially centred position in the carcass sleeve retained by the retaining elements and by the coupling elements;
- figure 10 shows an operating step in which axially inner annular shoulders of the shaping drum were radially expanded;
- figure 11 shows an operating step in which axially opposite half parts of the shaping drum were axially moved away to bring the annular shoulders against axially inner walls of the beads;
- figure 12 shows an operating step in which the coupling elements are disengaged from the beads, retained by the annular shoulders;
- figure 13 shows an operating step in which the coupling elements are positioned radially moved away from the alignment axis, while annular gripping elements are expanded against radially inner edges of the beads and the retaining elements have disengaged the outer surface of the carcass sleeve;
- figure 14 shows an embodiment variant of the apparatus in an operating step in which the coupling elements were radially approached to the alignment axis;
- figure 15 shows the embodiment variant of the apparatus during the engagement of the beads by the coupling elements, while the retaining elements are brought against the carcass sleeve;
- figure 16 shows the embodiment variant of the apparatus with the shaping drum inserted in the carcass sleeve retained by the retaining elements and by the coupling elements;
- figure 17 shows the embodiment variant with the annular gripping elements and the annular shoulders of the shaping drum activated against the beads;
- figure 18 shows the embodiment variant with the coupling elements removed from the beads and the retaining elements removed from the radially outer surface of the carcass sleeve;
- figure 19 schematically shows, in radial section, a tyre for vehicle wheels that is attainable in accordance with the present invention.

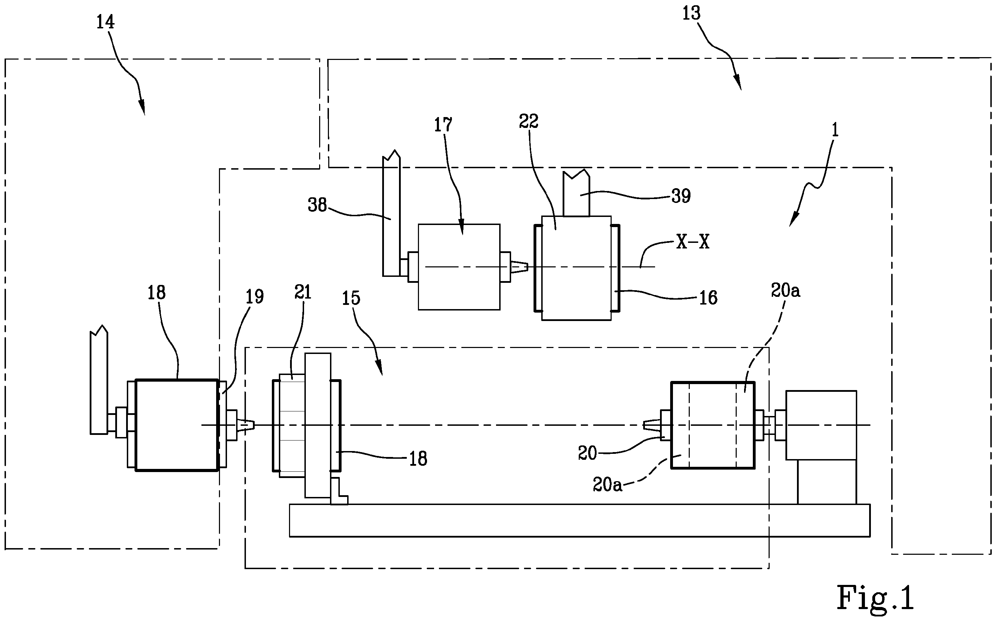

With particular reference to figure 1, reference number 1 overall indicates an apparatus for building tyres usable for actuating a building process according to the present invention.

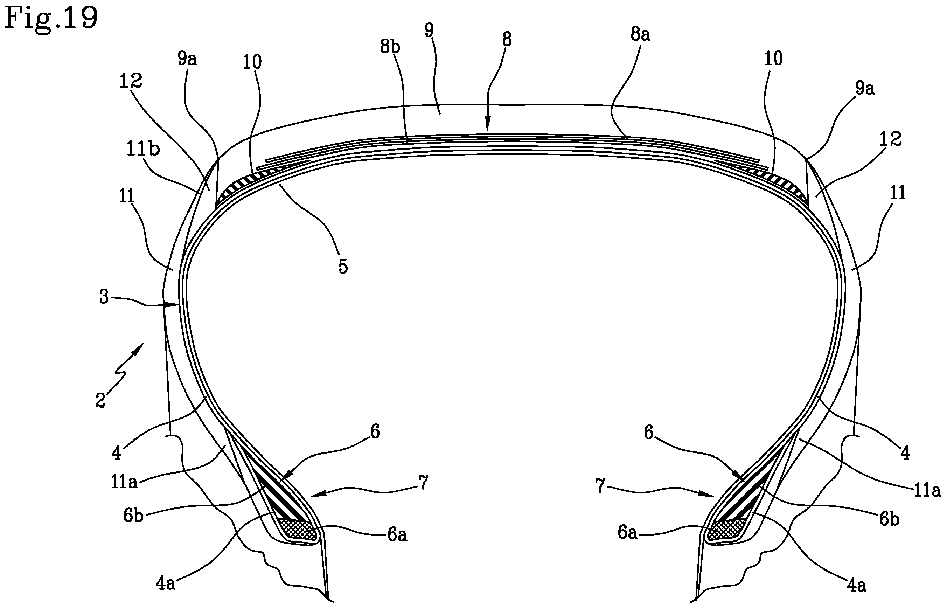

One example of a tyre typically attainable by means of the apparatus 1 is represented in figure 19 and overall indicated with 2. The tyre 2 comprises a carcass structure 3 having at least one carcass ply 4. A layer of impermeable elastomeric material or so-called liner 5 can be applied inside the carcass ply/plies 4. Two anchoring annular structures 6, each comprising a so-called bead-core 6a carrying an elastomeric filler 6b in a radially outer position, are engaged with respective end flaps 4a of the carcass ply/plies 4. The anchoring annular structures 6 are integrated in proximity to zones normally identified with the term "beads" 7, at which the engagement between the tyre 2 and a respective mounting rim normally occurs.

A belt structure 8, comprising one or more belt layers 8a, 8b, is extended circumferentially around the carcass structure 3, and a tread band 9 is circumferentially superimposed on the belt structure 8.

The belt structure 8 can be associated with so-called "under-belt inserts" 10, each situated between the carcass ply/plies 4 and one of the axially opposite terminal edges of the belt structure 8.

Two sidewalls 11 are applied in lateral opposite positions on the carcass ply/plies 4. Each sidewall has a radially inner apex 11a joined to the corresponding bead 7 and a radially outer terminal portion 11b possibly joined to an axially outer apex 12 carried by the tread band 9 at an axially outer end 9a thereof.

The apparatus 1 is integrated in a plant arranged for building tyres in which a carcass production line 13, an outer sleeve production line 14 and an assembly station 15 can be identified, schematically indicated with dashed line in figure 1.

In the carcass production line 13, at least liner 5, beads 7, carcass ply or plies 4 and preferably at least one part of the sidewalls 11 are made and/or mutually assembled, in order to attain a substantially cylindrical carcass sleeve 16 on at least one building drum 17 moved according to a pre-established path through a plurality of work stations, not represented and not described in detail since they can be attained in any convenient manner.

Belt layers 8a, 8b, tread band 9 and preferably at least one part of the sidewalls 11 are made and/or mutually assembled in the outer sleeve production line 14, in order to attain a substantially cylindrical outer sleeve 18 on at least one auxiliary drum 19 moved according to a pre-established path through a plurality of further work stations, not represented and not described in detail since they can be attained in any convenient manner.

The paths followed by the building drums 17 and by the auxiliary drums 19 respectively in the carcass production line 13 and in the outer sleeve production line 14 converge towards the assembly station 15.

Operating in the assembly station 15 are at least one shaping drum 20 that is adapted to receive the carcass sleeve 16 previously removed from the building drum 17, and a transfer ring 21 operatively couplable with the auxiliary drum 19 and with the shaping drum 20. The transfer ring 21 is adapted to pick up the outer sleeve 18 from the auxiliary drum 19, to retain it in axially centred position with respect to the shaping drum 20 coaxially inserted within the outer sleeve 18 while the latter is retained by the transfer ring itself. The shaping drum 20 has two half parts 20a axially movable in mutual approaching and moving away. Following a mutual axial approaching of the half parts 20a of the shaping drum 20, the carcass sleeve 16, initially attained according to the substantially cylindrical shape of the building drum 17, assumes a substantially toroidal shape. Hence, the mutual assembly is obtained between the carcass sleeve 16 and the outer sleeve 18 previously placed in axially centred position around the shaping drum 20. The green tyre 2 thus obtained is adapted to be subsequently subjected to a moulding and vulcanisation treatment.

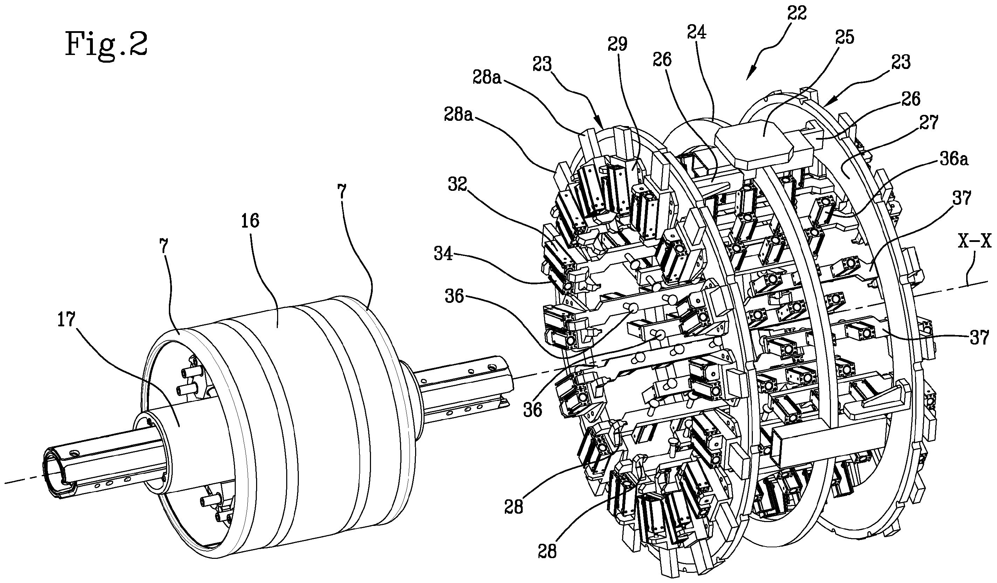

The transfer of the carcass sleeve 16 from the building drum 17 to the shaping drum 20 occurs by means of the aid of a conveyor overall indicated with 22 in figures 1 and 2.

The conveyor 22 comprises two gripping members 23 mutually side by side and coaxial with respect to a mutual alignment axis X-X.

Preferably, the gripping members 23 are slidably guided with respect to a central support ring 24, axially interposed between the same in an axial centre line plane M. At least one axial movement device 25, for example operatively carried by the central support ring 24, is activatable for moving the gripping members 23 axially in mutual approaching and moving away. The axial movement device 25 can for example comprise at least one rotary actuator that drives two racks respectively carried by drive bars 26 axially projecting from each of the gripping members 23 towards the central support ring 24.

Each of the gripping members 23 comprises an annular support 27, preferably in disc form, carrying a plurality of coupling elements 28 circumferentially distributed around the alignment axis X-X. Each coupling element 28 has a support stem 28a slidably engaged with the annular support 27 of the respective gripping member 23, for example through a guide block 29 fixed to the same annular support 27.

At a radially inner end of each of the support stems 28a belonging to one of the gripping members 23, a gripping protrusion 30 is arranged that is axially projecting towards the other gripping member 23. The gripping protrusion 30 has an abutment surface 31 arranged to act against the bead 7 of the carcass sleeve 16. In one embodiment, the abutment surface 31 faces radially outward, and is adapted to act against a radially inner edge of the respective bead 7.

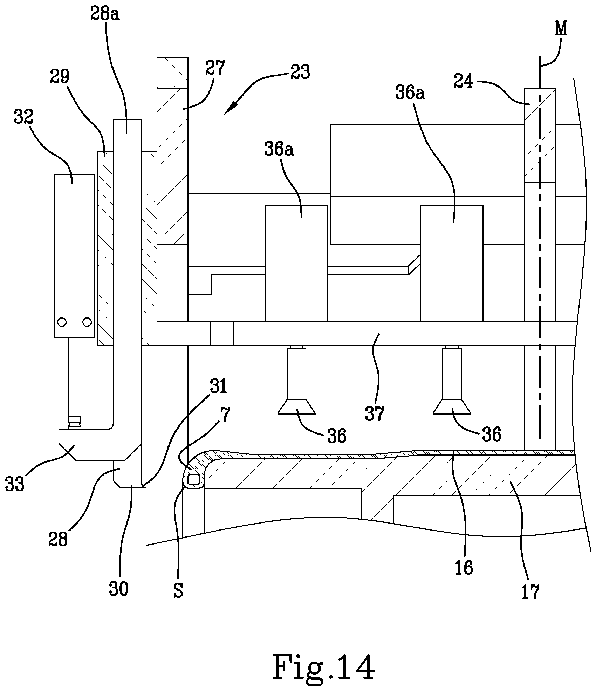

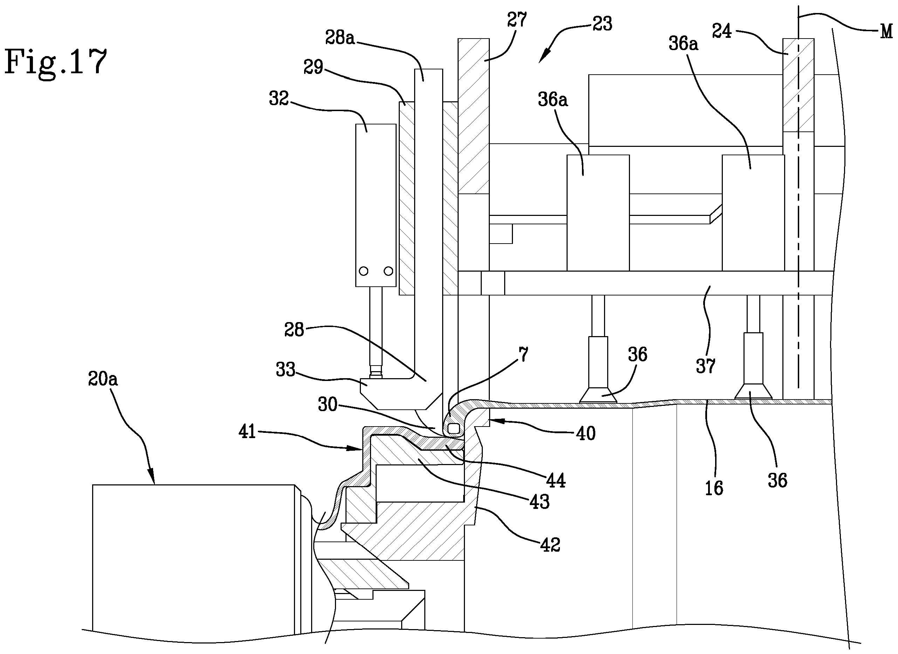

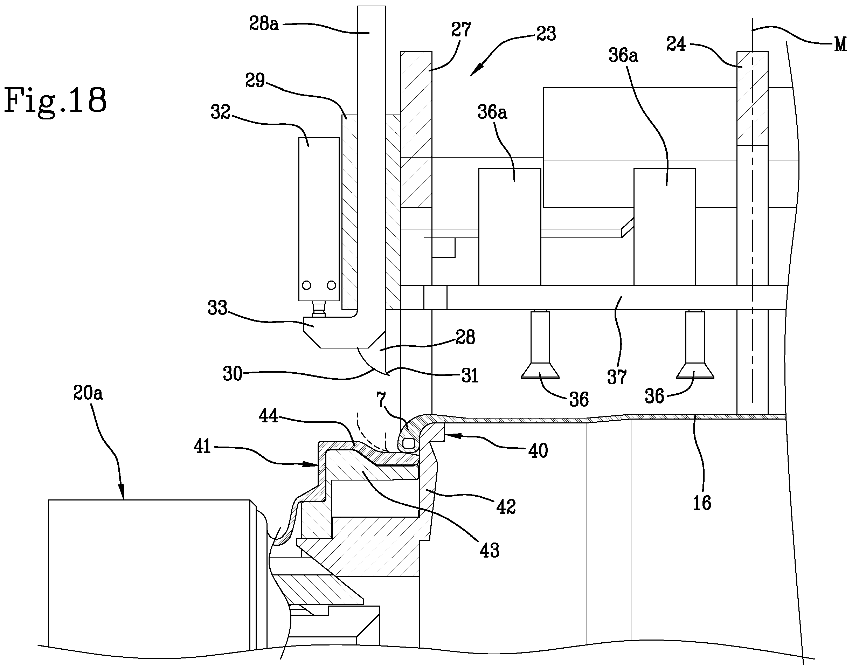

In one possible embodiment variant, illustrated in figures 14 to 18, the abutment surface 31 faces axially inward, i.e. towards the axial centre line plane M, and is adapted to act against an undercut S defined along an axially outer circumferential edge of the respective bead 7. The undercut S is radially facing towards the alignment axis X-X, and the abutment surface 31 can be counter-shaped thereto.

At least one actuator carried by the annular support 27 operates on at least one of the coupling elements 28 in order to move it radially with respect to the alignment axis X-X, between a contracted condition and an expanded condition. In the illustrated example, provision is made for an actuator for each of the coupling elements 28, but it is possible that a single actuator can drive the simultaneous movement of multiple coupling elements 28 belonging to a same gripping member 23.

In the illustrated embodiment, each actuator comprises a first cylinder 32, with fluid-dynamic actuation, acting with a drive stem thereof on an attachment bracket 33 axially projecting from the support stem 28a. The first cylinder 32 can be directly fixed to the guide block 29, or slidably guided with respect to the latter and integral with an additional cylinder 34, which operates with a stem thereof against a contrast bracket 35 axially projecting from the guide block 29.

In other words, the first cylinder 32 and the additional cylinder 34 are mechanically connected in series in order to drive the movement of the coupling element 28 between the contracted condition and the expanded condition. The selective activation of the first cylinder 32 and of the additional cylinder 34 determines the selective positioning of the respective coupling element 28 in the expanded condition, in the contracted condition, and in an intermediate condition between the contracted condition and the expanded condition.

Preferably, when the coupling element 28 is in the intermediate condition, the first cylinder 32 and the additional cylinder 34 are each in a respective limit stop condition. In other words, the radial positioning of the coupling element 28 in the intermediate condition is mechanically determined by limit stops in both the first cylinder 32 and the additional cylinder 34.

Preferably, the coupling elements 28 have a radial self-centring movement.

The conveyor 22 can also comprise radially outer retaining elements 36, distributed according to a substantially cylindrical area of action between the gripping members 23 and selectively activatable for retaining a radially outer surface of the carcass sleeve 16.

The retaining elements 36 can for example comprise suction cups pneumatically activatable through a non-illustrated suction circuit. In the illustrated example, the retaining elements 36 are carried by respective arms 37 axially and projectingly extended with respect to the annular support 27 of each gripping member 23. More particularly, provision is made such that each arm 37 extends overhanging from one of the guide blocks 29 fixed to the annular support 27 of the respective gripping member 23. In the illustrated example, each arm 37 carries three retaining elements 36 axially spaced from each other. The arms 37 carried by each of the gripping members 23 are each arranged between two of the arms 37 carried by the other gripping member 23. In other words, the arms 37 belonging to both of the gripping members 23 circumferentially follow each other according to an alternated sequence.

Provision can be made such that each of the retaining elements 36 is engaged with the respective arm 37 by means of a radial movement actuator 36a. The activation of the radial movement actuators 36a determines the movement of the retaining elements 36 between a work condition, in which they are radially approached with respect to the alignment axis X-X in order to operate on the outer surface of the carcass sleeve 16, and a rest condition in which they are radially moved away from the alignment axis X-X and spaced from the carcass sleeve 16.

The conveyor 22 is adapted to interact with the building drum 17 in order to pick up the carcass sleeve 16 previously formed thereon. For such purpose, the building drum 17, carrying the carcass sleeve 16, is arranged in an axial alignment X-X relationship with the conveyor 22 arranged with the coupling elements 28 and the retaining elements 36 in radially expanded condition, as in figures 1 and 2. In the illustrated example, the building drum 17 is supported by a robotic arm 38 and the conveyor 22 is supported by a movement arm 39.

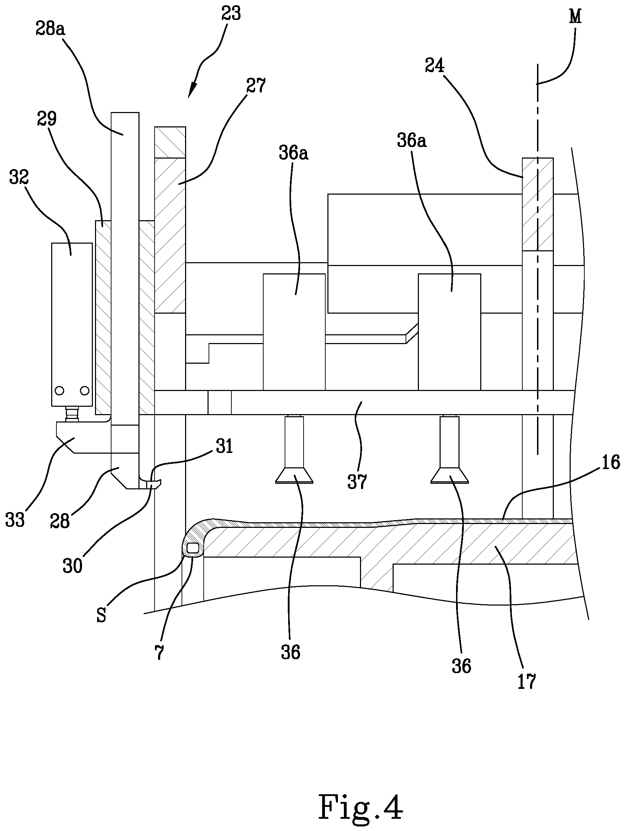

With a movement of the conveyor 22 and/or of the building drum 17, the latter is arranged in coaxial and axially centred position between the gripping members 23, as in figure 4. The positioning of the coupling elements 28 in the expanded condition and of the retaining elements 36 in the rest condition allows the easy axial insertion of the building drum 17, in the absence of interferences between the carcass sleeve 16 and the components of the conveyor 22. Indeed, in the expanded condition, the gripping protrusions 30, as with the retaining elements 36, are preferably positioned tangent to an ideal circumference whose minimum diameter is greater than a maximum diameter presented by the carcass sleeve 16.

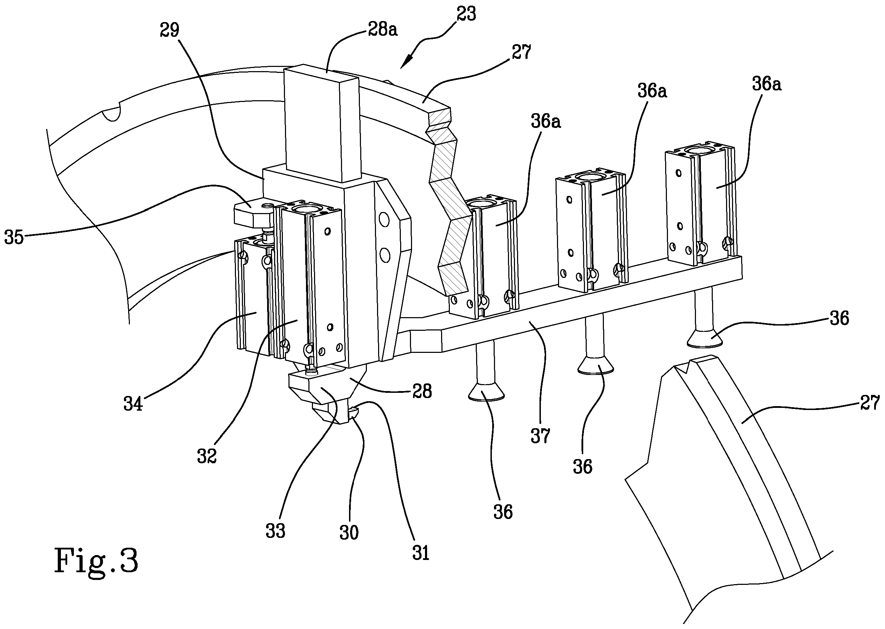

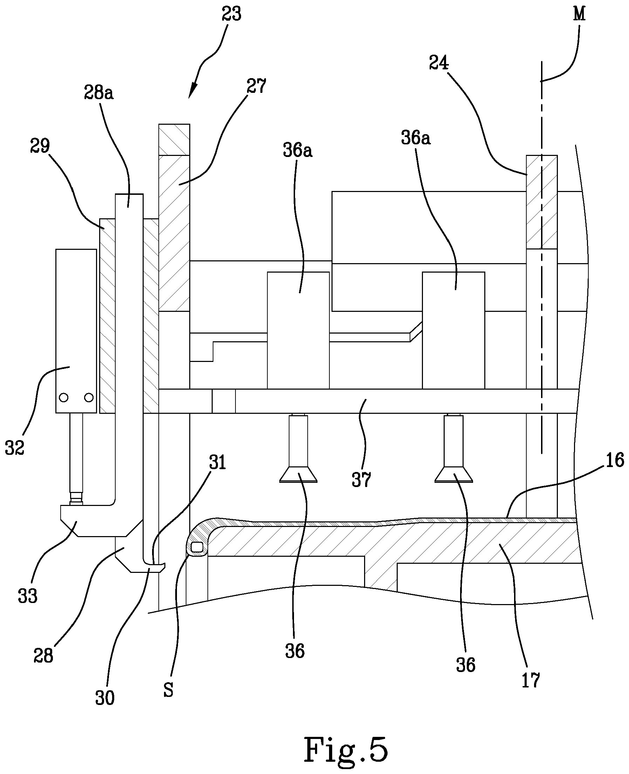

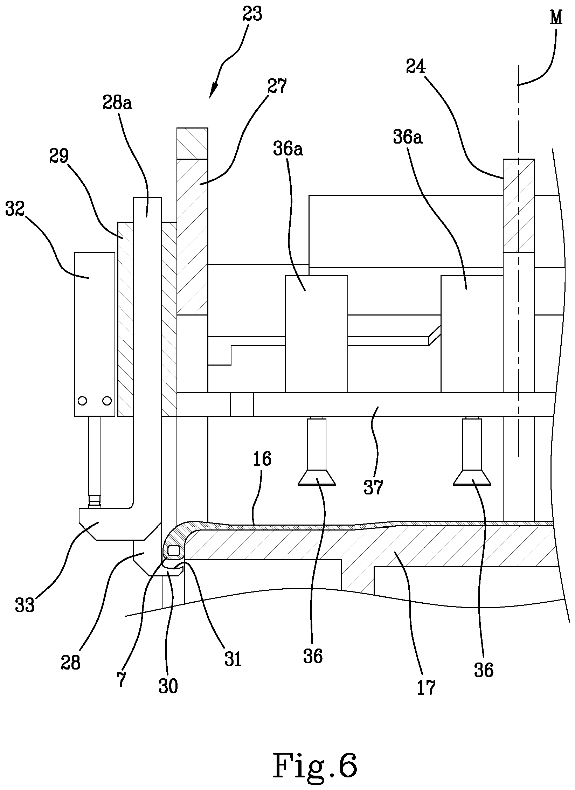

Upon executed positioning, the actuators of the gripping members 23 are activated to position the coupling elements 28 in radially contracted condition exemplified in figure 5. In the example illustrated in figures 2 to 13, the combined activation of the first cylinders 32 and of the additional cylinders 34 radially translates, preferably in a self-centring manner, the coupling elements 28 of each gripping member 23 towards the alignment axis X-X, positioning the gripping protrusions 30 with the respective abutment surfaces 31 distributed according to diameter circumferences smaller than an internal diameter of the beads 7. By means of the axial movement device 25, the coupling elements 28 are translated axially and preferably symmetrically towards the carcass sleeve 16, to position the gripping protrusion 30 of each coupling element 28 with the abutment surface 31 thereof radially aligned with the respective bead 7, as exemplified in figure 6. In this circumstance, the gripping protrusions 30 of each gripping member 23 are traversed by a radial plane, also intersecting the respective bead 7.

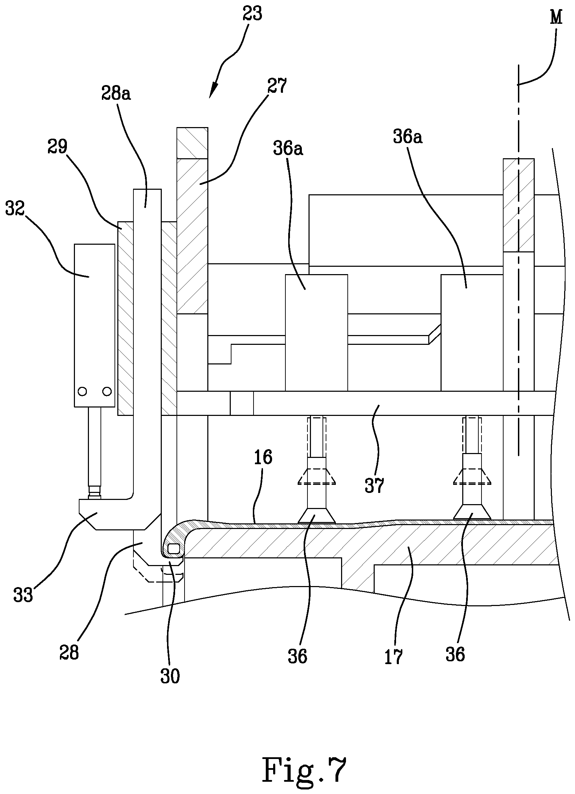

A new activation of the actuators determines a radial translation of the coupling elements 28 away from the alignment axis X-X. The gripping protrusion 30 of each coupling element 28 is consequently brought with the abutment surface 31 thereof against the radially inner edge of the respective bead 7, as exemplified in figure 7, such that the beads 7 are effectively retained coaxial to the alignment axis X-X.

In the example illustrated in figures 2 to 13, this translation can be obtained by means of the activation of only the additional cylinders 34.

The operating sequence executed in the embodiment variant of figures 14 to 16 instead provides that, before the activation of the axial movement device 25, the activation of the actuators comprising for example only the first cylinders 32 brings the coupling elements 28 into the radially contracted condition, with the respective abutment surfaces 31 axially facing in axial alignment relationship with the undercut S defined along the axially outer circumferential edge of the respective bead 7, as exemplified in figure 14.

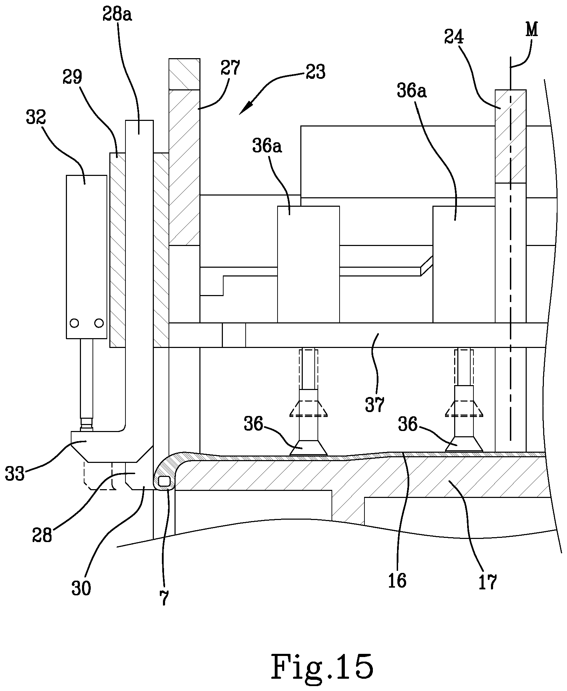

By means of the axial movement device 25, the coupling elements 28 are axially translated towards the carcass sleeve 16, positioning the gripping protrusion 30 of each coupling element 28 in engagement relationship with said undercut S, as exemplified in figure 15. The abutment surface 31 of each coupling element 28, having geometric shape substantially complementary to the undercut S, acts against the latter such that the beads 7 are effectively retained coaxial to the alignment axis X-X.

Simultaneously with the above-described grasping of the beads 7, for example before, during or after the execution thereof, the activation of the retaining elements 36 can be actuated. For such purpose, the action of the radial movement actuators 36a, determines the approaching of the retaining elements 36 against the radially outer surface of the carcass sleeve 16, as exemplified in figures 7 and 15, while the activation of the aforesaid suction circuit determines the fixing of the radially outer surface by means of attraction actions towards the retaining elements themselves. The carcass sleeve 16 is thus subjected to a retention action 36 distributed on the radially outer surface thereof.

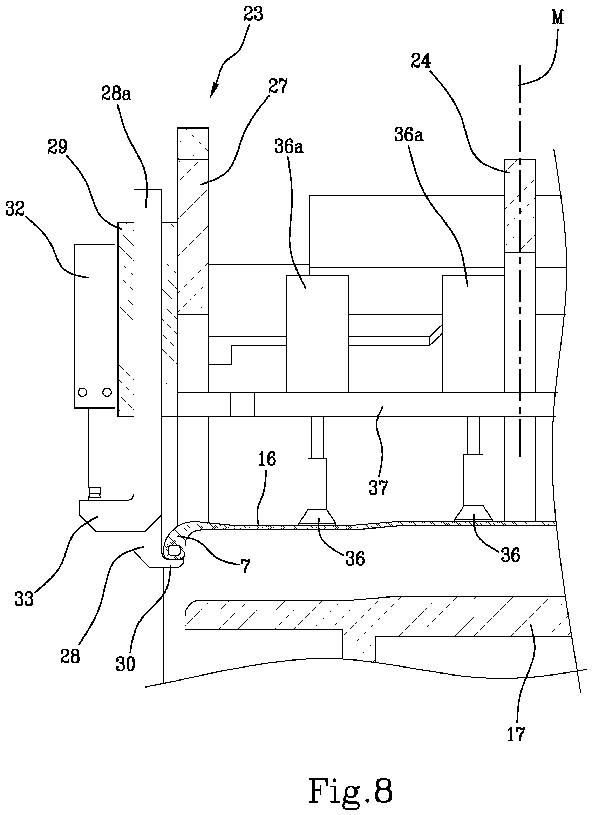

After having activated the retaining elements 36, these are preferably radially constrained to the coupling elements 28. This constraint prevents relative movements between the outer surface of the carcass sleeve 16 and the beads 7 to arise, which relative movements can create undesired deformations, in particular in the action of removing the building drum 17 as described hereinbelow. The building drum 17 can then be radially contracted, as exemplified in figure 8, in order to be axially extracted with respect to the gripping members 23 and consequently removed from the carcass sleeve 16, while the latter is firmly retained at the beads 7 and at the radially outer surface thereof, so as to not undergo significant deformations.

The carcass sleeve 16 is then adapted to be engaged on the shaping drum 20.

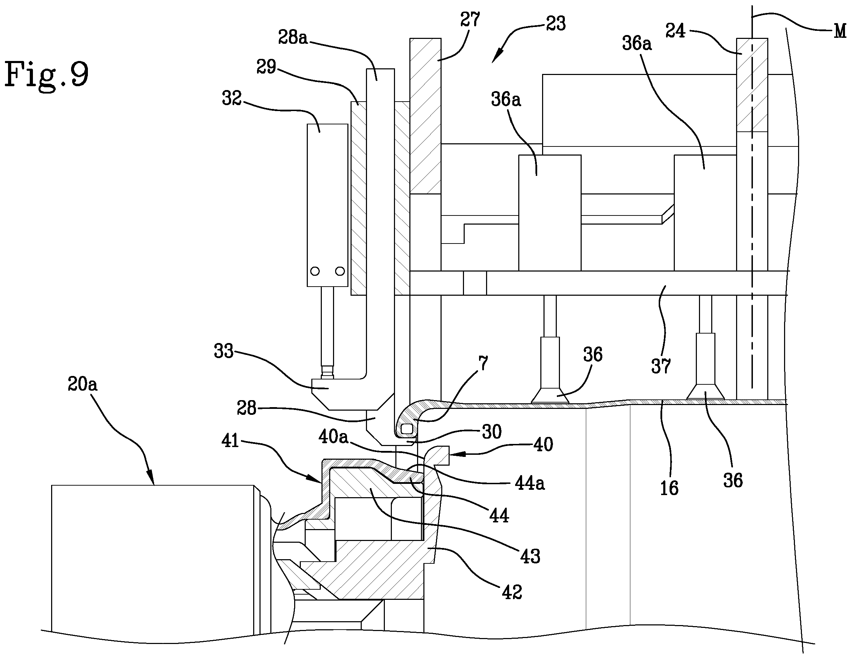

As is visible in figures 9 to 13 and figures 16 to 18, each of the half parts 20a of the shaping drum 20 preferably has an annular shoulder 40 and a radially expandable annular gripping element 41, preferably in a self-centring manner, arranged in axially outer position with respect to the annular shoulder 40.

The annular shoulder 40 of each half part 20a consists of a plurality of abutment sectors 42 which are circumferentially distributed and radially movable, preferably in a self-centring manner, between a contracted condition and an expanded condition. In the contracted condition, the abutment sectors 42 confer to the annular shoulder 40 a maximum diameter smaller than the internal diameter of the beads 7, so as to not obstruct the axial insertion of the carcass sleeve 16 on the shaping drum 20. In the expanded condition, the abutment sectors 42 confer to the annular shoulder 40 a maximum diameter greater than the internal diameter of the beads 7 and define, for each of the half parts 20a of the shaping drum 20, an axial thrust surface 40a facing axially away from the other half part.

The annular gripping element 41 of each half part 20a in turn comprises a plurality of circumferentially distributed expansion sectors 43, around which an elastomeric ring 44 is fit, in elastic dilation condition; such elastomeric ring 44 has a radial thrust surface 44a facing towards the radially inner edge of the respective bead 7. The expansion sectors 43 are radially movable between a contracted condition and an expanded condition. When the expansion sectors 43 are in the contracted condition, a maximum diameter of the annular gripping element 41, detectable externally on the elastomeric ring 44, is smaller than the internal diameter of the beads 7, so as to not obstruct the axial insertion of the carcass sleeve 16 on the shaping drum 20. When the expansion sectors 43 are in the expanded condition, the radial surface 44a of the elastomeric ring 44 acts against the radially inner edge of the respective bead 7 in order to exert a mechanical thrust action against it and, preferably, also an action of hermetic seal useful for the purpose of the subsequent step of shaping the carcass sleeve 16.

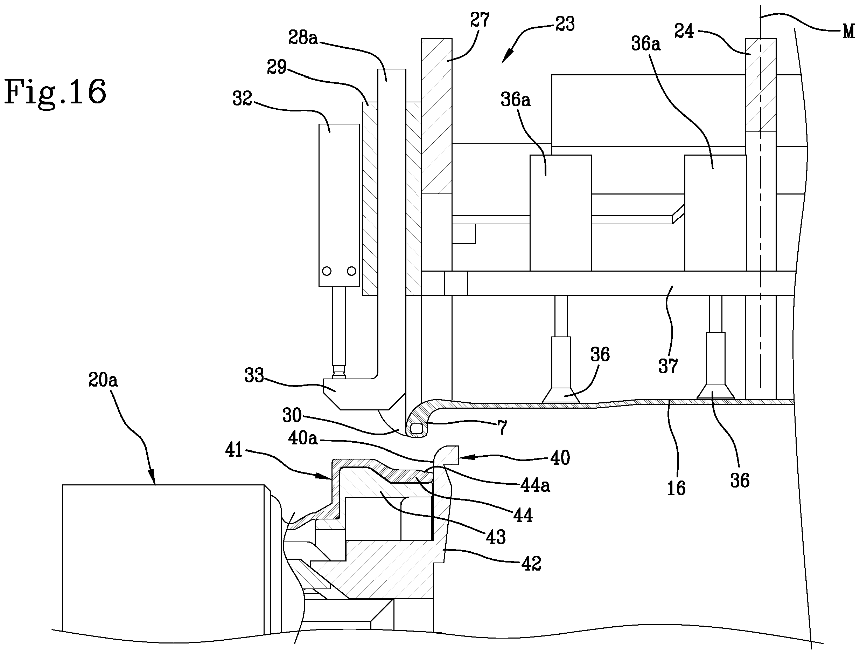

The engagement of the carcass sleeve 16 with the shaping drum 20 provides that the latter be axially inserted in a position coaxially centred in the carcass sleeve itself, while the latter is retained by the gripping members 23 and by the retaining elements 36 of the conveyor 22, as exemplified in figures 9 and 16. The insertion can be executed by means of axial movement of the conveyor 22 with respect to the shaping drum 20, or vice versa.

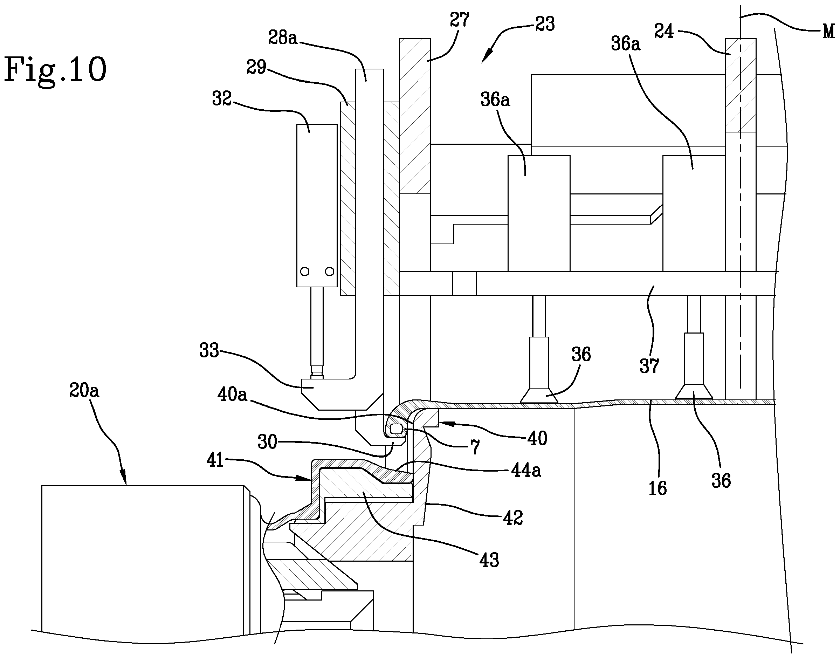

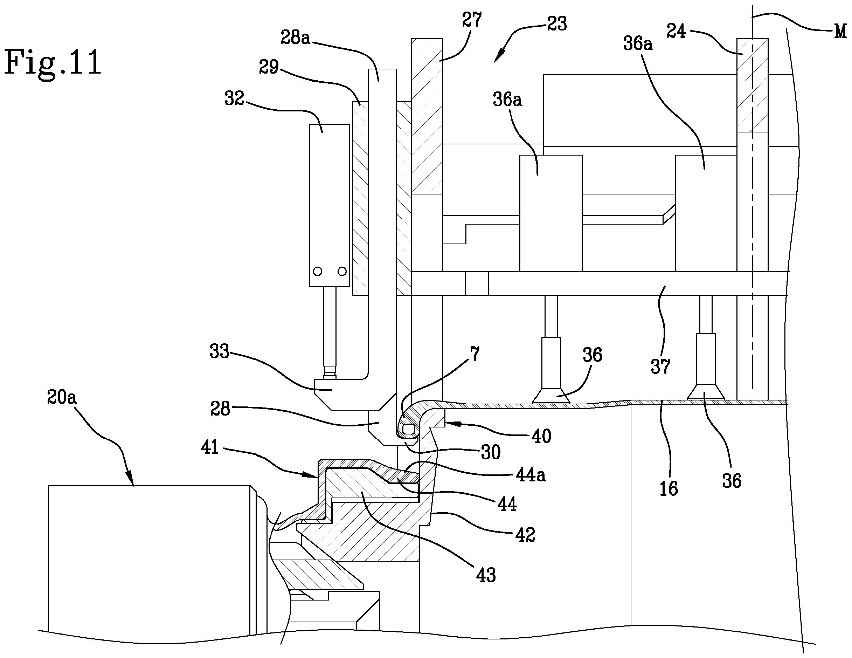

The annular shoulders 40 carried by each of two half parts 20a are expanded, preferably in a self-centring manner by means of a self-centring kinematic mechanism (not illustrated), from the contracted condition to the expanded condition, as in figure 10. With an axial moving away movement of the half parts 20a, the annular shoulders 40 are substantially moved away and preferably symmetrically with respect to each other in order to be approached to the respective beads 7, until each brings the axial thrust surface 40a thereof to act against an axially inner wall of the bead itself, as exemplified in figure 11. The axial translation of the annular shoulders 40 preferably occurs in a symmetric manner in order to prevent irregular axial movements of the carcass sleeve 16.

The retaining elements 36, up to now maintained active on the radially outer surface of the carcass sleeve 16, can now be deactivated and moved away from sleeve itself, or maintained active in engagement relationship up to the completion of the subsequent expansion of the annular gripping elements 41.

Preferably, disengaging the retaining elements 36 comprises radially translating the retaining elements 36 away from the alignment axis X-X, in order to position them according to an outer diameter greater than a maximum diameter presented by the carcass sleeve 16.

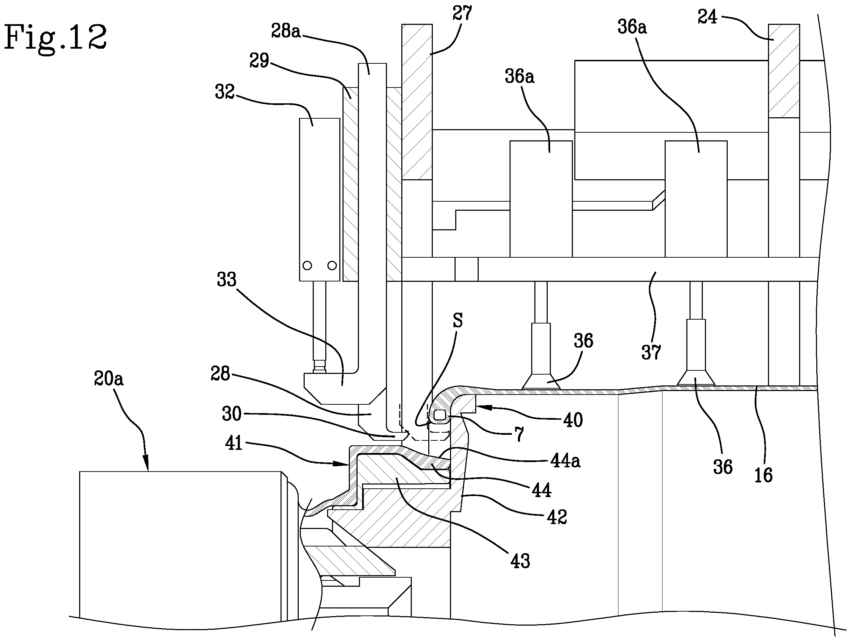

The expansion of the annular gripping elements 41 can be preceded by the disengagement of the coupling elements 28 from the beads 7, as in figure 12. More particularly, such disengagement can be actuated by axially translating coupling elements 28 away from the carcass sleeve 16, to position each gripping protrusion 30 in axially outer position with respect to the respective bead 7. Subsequently, the coupling elements 28 are translated away from the alignment axis X-X, in order to reposition the gripping protrusions 30 in the expanded condition.

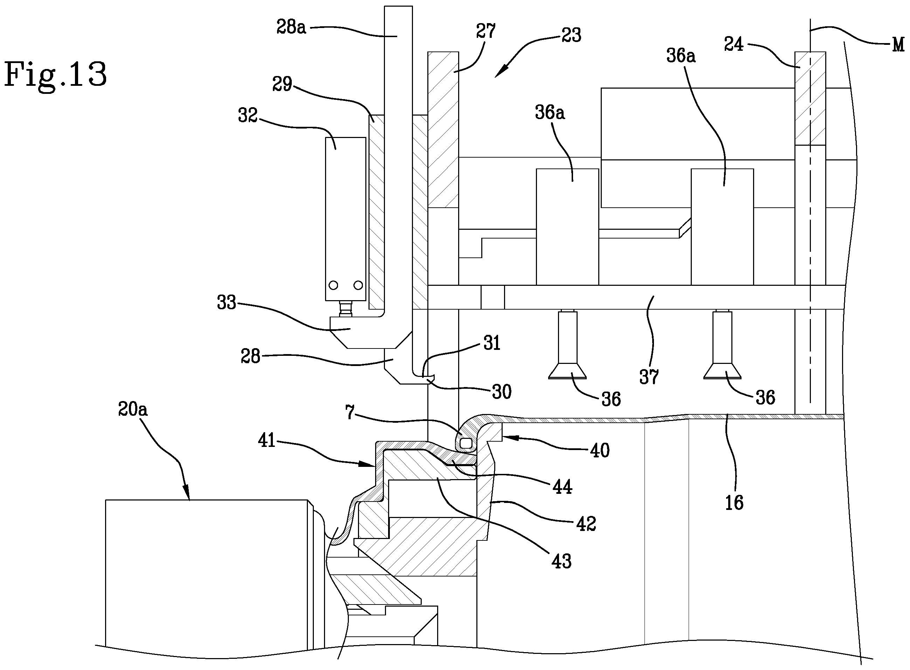

In the embodiment illustrated in figures 2 to 13, the axial moving away of the coupling elements 28 is preferably preceded by a radial translation of the coupling elements 28 towards the alignment axis X-X in order to space each gripping protrusion 30 from the radially inner surface of the respective bead 7, as displayed with a dashed line in figure 12. In the embodiment variant illustrated in figures 14 to 18, the disengagement of the beads 7 can instead occur also after the expansion of the annular gripping elements 41, without requiring the radial approaching of the coupling elements 28 before their mutual axial moving away. Upon reaching the expanded condition, the annular gripping elements 41 each operate in radial thrust relationship against the radially inner edge of the respective bead 7, as exemplified in figures 13, 17 and 18.

The carcass sleeve 16 is at this point correctly engaged with the shaping drum 20, which can therefore be axially extracted from the conveyor 22 in the absence of mechanical interferences.

The shaping drum 20 carrying the carcass sleeve 16 will be subsequently brought into engagement relationship with the transfer ring 21 in the assembly station 15, in order to actuate - in a known manner - the shaping of the carcass sleeve 16 according to a toroidal configuration for the purpose of coupling with the outer sleeve 18.

## Claims

1. Process for building tyres for vehicle wheels, comprising the steps of:
forming a carcass sleeve (16) on a building drum (17), comprising at least one carcass ply having end flaps engaged with respective annular reinforcing structures (7) incorporated in respective beads;
picking up the carcass sleeve (16) from the building drum (17);
engaging the carcass sleeve (16) on a shaping drum (20);
toroidally shaping the carcass sleeve (16) carried by the shaping drum (20) to couple it with an outer sleeve (18) comprising a belt structure,
wherein picking up the carcass sleeve (16) comprises:
arranging the building drum (17) carrying the carcass sleeve (16) in a coaxial and axially centred position between two gripping members (23) mutually side by side and coaxial with respect to an alignment axis (X-X) wherein each gripping member (23) comprises:
an annular support (27);
a plurality of coupling elements (28) carried by the annular support (27) and circumferentially distributed around the alignment axis (X-X);
wherein each coupling element (28) has a support stem (28a) slidably engaged with the annular support (27) of the respective gripping member (23), and a gripping protrusion (30) which protrudes axially from the support stem (28a) towards the other gripping member (23);
gripping each of the beads (7) of the carcass sleeve (16) by means of said plurality of coupling elements (28) carried by each of the gripping members (23);
contracting the building drum (17) to disengage it from the carcass sleeve (16) retained by the coupling elements (28).

2. Process according to claim 1, wherein before contracting the building drum (17), an action of retaining the carcass sleeve (16) is carried out by a retention action distributed on a radially outer surface thereof, said action of retaining the carcass sleeve (16) being maintained during at least a part of the action of engaging the carcass sleeve (16) on the shaping drum (20).

3. Process according to one or more of the preceding claims, wherein gripping each bead (7) comprises:
radially translating the coupling elements (28) of each gripping member (23) towards said alignment axis (X-X), to position gripping protrusions (30) of the coupling elements themselves at a smaller diameter than an internal diameter of the beads (7);
axially translating the coupling elements (28) towards the carcass sleeve (16), to position the gripping protrusion (30) of each coupling element (28) in a position radially aligned with the respective bead (7);
radially translating the coupling elements (28) away from the alignment axis (X-X), to bring the gripping protrusion (30) of each coupling element (28) against a radially inner edge of the respective bead (7).

4. Process according to claim 1 or 2, wherein gripping each bead (7) comprises:
radially translating the coupling elements (28) of each gripping member (23) towards said alignment axis (X-X), to position gripping protrusions (30) of the coupling elements (28) themselves in axial alignment with an undercut (S) defined along an axially outer circumferential edge of the respective bead (7);
axially translating the coupling elements (28) towards the carcass sleeve (16), to position the gripping protrusion (30) of each coupling element (28) in engagement relationship with said undercut (S).

5. Process according to one or more of the preceding claims, wherein the building drum (17) is axially extracted with respect to the gripping members (23), after the action of contracting the building drum (17).

6. Process according to one or more of the preceding claims, wherein the action of engaging the carcass sleeve (16) on the shaping drum (20) comprises:
axially inserting the shaping drum (20) in a position coaxially centred in the carcass sleeve (16) retained by the gripping members (23);
radially expanding annular shoulders (40) carried by each of two axially opposite half parts (20a) of the shaping drum (20), from a contracted condition in which a maximum diameter of the annular shoulders (40) is smaller than an internal diameter of the beads (7), to an expanded condition in which said maximum diameter is greater than the internal diameter of the beads (7);
moving the annular shoulders (40) axially away from each other in the expanded condition, to bring them each against an axially inner wall of one of the beads (7);
radially expanding annular gripping elements (41) carried by each of two axially opposite half parts (20a) of the shaping drum (20), from a contracted condition in which a maximum diameter of the annular gripping elements (41) is smaller than an internal diameter of the beads (7), to an expanded condition in which each annular gripping element (41) operates in radial thrust relationship against a radially inner edge of one of the beads (7).

7. Process according to claim 6 when dependent on claim 2, wherein the action of retaining the carcass sleeve (16) is maintained at least until completion of the action of moving the annular shoulders (40) axially away from each other in the expanded condition.

8. Process according to claim 6 or 7, wherein before radially expanding the annular gripping elements (41), said coupling elements (28) are disengaged from the beads (7), wherein disengaging the coupling elements (28) from the beads (7) comprises:
axially translating the coupling elements (28) away from the carcass sleeve (16), to position each gripping protrusion (30) in an axially outer position to the respective bead (7);
radially translating the coupling elements (28) away from the alignment axis (X-X), to position the gripping protrusions (30) according to a minimum diameter greater than a maximum diameter of the carcass sleeve (16).

9. Apparatus for building tyres for vehicle wheels, comprising:
a building drum (17);
a shaping drum (20);
a conveyor (22) configured to pick a carcass sleeve (16) from the building drum (17) and place it on the shaping drum (20);
wherein the conveyor (22) comprises:
two gripping members (23) mutually side by side and coaxial with respect to an alignment axis (X-X), wherein each gripping member (23) comprises:
an annular support (27);
a plurality of coupling elements (28) carried by the annular support (27) and circumferentially distributed around the alignment axis (X-X);
wherein each coupling element (28) has a support stem (28a) slidably engaged with the annular support (27) of the respective gripping member (23), and a gripping protrusion (30) which protrudes axially from the support stem (28a) towards the other gripping member (23).

10. Apparatus according to claim 9, wherein each gripping member (23) further comprises at least one actuator carried by the annular support (27) and operating on one or more of the coupling elements (28) to move them radially with respect to the alignment axis (X-X) between a contracted condition and an expanded condition, wherein said actuator comprises a first cylinder (32) active on the support stem (28a), and an additional cylinder (34) operating against a contrast bracket (35) rigidly carried by the annular support (27).

11. Apparatus according to claim 10, wherein the first cylinder (32) and the additional cylinder (34) are mechanically connected in series to selectively position the coupling element (28) in the contracted condition, in the expanded condition, and in an intermediate condition between the contracted condition and the expanded condition.

12. Apparatus according to one or more of claims 9 to 11, wherein the conveyor (22) further comprises at least one axial movement device (25) for axially translating the coupling elements (28) of the gripping members (23) in mutual approaching and moving away, wherein the axial movement device (25) operates on the annular supports of the gripping members (23).

13. Apparatus according to one or more of claims 9 to 12, wherein it further comprises radially outer retention elements (36), distributed according to a substantially cylindrical area of action between the gripping members (23) and activatable to retain a radially outer surface of the carcass sleeve (16), wherein the retaining elements (36) are carried by arms (37) axially overhanging from the annular support (27) of each gripping member (23), towards the other gripping member (23).

14. Apparatus according to one or more of claims 9 to 13, wherein the shaping drum (20) comprises:
two half parts (20a) axially movable with respect to each other in which each half part comprises:
a radially expandable annular shoulder (40);
a radially expandable annular gripping element (41), arranged in an axially outer position with respect to said annular shoulder (40).

15. Apparatus according to claim 14, wherein the annular gripping element (41) of each half part comprises a plurality of circumferentially distributed and radially movable expansion sectors (43)and an elastomeric ring (44) fitted around the expansion sectors (43) and having a radially outer thrust surface.

## Patentansprüche

1. Prozess zur Herstellung von Reifen für Fahrzeugräder, umfassend die folgenden Schritte:
Bilden einer Karkassenhülse (16) auf einer Aufbautrommel (17), die mindestens eine Karkassenlage umfasst, die Endklappen aufweist, die mit jeweiligen ringförmigen Verstärkungsstrukturen (7) in Eingriff stehen, die in jeweilige Wülste eingearbeitet sind;
Aufnehmen der Karkassenhülse (16) von der Aufbautrommel (17);
Ineingriffbringen der Karkassenhülse (16) auf einer Formtrommel (20);
toroidales Formen der von der Formtrommel (20) getragenen Karkassenhülse (16), um sie mit einer Außenhülse (18) zu koppeln, die eine Gürtelstruktur umfasst,
wobei Aufnehmen der Karkassenhülse (16) umfasst:
Anordnen der Aufbautrommel (17), die die Karkassenhülse (16) trägt, in einer koaxialen und axial zentrierten Position zwischen zwei Greifelementen (23), die gemeinsam nebeneinander und koaxial in Bezug auf eine Ausrichtungsachse (X-X) liegen, wobei jedes Greifelement (23) umfasst:
eine ringförmige Stütze (27);
eine Vielzahl von Kopplungselementen (28), die von der ringförmigen Stütze (27) getragen werden und in Umfangsrichtung um die Ausrichtungsachse (X-X) herum verteilt sind;
wobei jedes Kopplungselement (28) einen Stützschaft (28a), der gleitend mit der ringförmigen Stütze (27) des jeweiligen Greifelements (23) in Eingriff steht, und einen Greifvorsprung (30) aufweist, der axial von dem Stützschaft (28a) in Richtung des anderen Greifelements (23) vorsteht;
Greifen jedes der Wulste (7) der Karkassenhülse (16) mittels der Vielzahl von Kopplungselementen (28), die von jedem der Greifelemente (23) getragen werden;
Zusammenziehen der Aufbautrommel (17), um sie von der von den Kopplungselementen (28) gehaltenen Karkassenhülse (16) zu lösen.

2. Prozess nach Anspruch 1, wobei vor dem Zusammenziehen der Aufbautrommel (17) ein Vorgang des Haltens der Karkassenhülse (16) durch einen Rückhaltevorgang durchgeführt wird, der auf einer radial äußeren Oberfläche davon verteilt ist, wobei der Vorgang des Haltens der Karkassenhülse (16) während mindestens eines Teils des Vorgangs des Ineingriffbringens der Karkassenhülse (16) auf der Formtrommel (20) aufrechterhalten wird.

3. Prozess nach einem oder mehreren der vorstehenden Ansprüche, wobei Greifen jedes Wulsts (7) umfasst:
radiales Verschieben der Kopplungselemente (28) jedes Greifelements (23) in Richtung der Ausrichtungsachse (X-X), um Greifvorsprünge (30) der Kopplungselemente selbst an einem kleineren Durchmesser als einem Innendurchmesser der Wulste (7) zu positionieren;
axiales Verschieben der Kopplungselemente (28) in Richtung der Karkassenhülse (16), um den Greifvorsprung (30) jedes Kopplungselements (28) in einer Position zu positionieren, die radial mit dem jeweiligen Wulst (7) ausgerichtet ist;
radiales Verschieben der Kopplungselemente (28) weg von der Ausrichtungsachse (X-X), um den Greifvorsprung (30) jedes Kopplungselements (28) an eine radial innere Kante des jeweiligen Wulsts (7) zu bringen.

4. Prozess nach Anspruch 1 oder 2, wobei Greifen jedes Wulsts (7) umfasst:
radiales Verschieben der Kopplungselemente (28) jedes Greifelements (23) in Richtung der Ausrichtungsachse (X-X), um Greifvorsprünge (30) der Kopplungselemente (28) selbst in axialer Ausrichtung mit einem Hinterschnitt (S) zu positionieren, die entlang einer axial äußeren Umfangskante des jeweiligen Wulsts (7) definiert ist;
axiales Verschieben der Kopplungselemente (28) in Richtung der Karkassenhülse (16), um den Greifvorsprung (30) jedes Kopplungselements (28) in Eingriffsbeziehung mit dem Hinterschnitt (S) zu positionieren.

5. Prozess nach einem oder mehreren der vorstehenden Ansprüche, wobei die Aufbautrommel (17) nach dem Vorgang des Zusammenziehens der Aufbautrommel (17) in Bezug auf die Greifelemente (23) axial ausgezogen wird.

6. Prozess nach einem oder mehreren der vorstehenden Ansprüche, wobei der Vorgang des Eingreifens der Karkassenhülse (16) auf der Formtrommel (20) umfasst:
axiales Einsetzen der Formtrommel (20) in einer Position, die in der durch die Greifelemente (23) gehaltenen Karkassenhülse (16) koaxial zentriert ist;
radiales Ausdehnen von ringförmigen Schultern (40), die von jeder von zwei axial gegenüberliegenden Halbteilen (20a) der Formtrommel (20) getragen werden, aus einem zusammengezogenen Zustand, in dem ein maximaler Durchmesser der ringförmigen Schultern (40) kleiner als ein Innendurchmesser der Wulste (7) ist, in einen ausgedehnten Zustand, in dem der maximale Durchmesser größer als der Innendurchmesser der Wulste (7) ist;
Bewegen der ringförmigen Schultern (40) in dem ausgedehnten Zustand axial voneinander weg, um sie jeweils an eine axial innere Wand eines der Wulste (7) zu bringen;
radiales Ausdehnen von ringförmigen Greifelementen (41), die von jeder von zwei axial gegenüberliegenden Halbteilen (20a) der Formtrommel (20) getragen werden, aus einem zusammengezogenen Zustand, in dem ein maximaler Durchmesser der ringförmigen Greifelemente (41) kleiner als ein Innendurchmesser der Wulste (7) ist, in einen ausgedehnten Zustand, in dem jedes ringförmige Greifelement (41) in radialer Druckbeziehung gegen eine radial innere Kante von einem der Wulste (7) wirkt.

7. Prozess nach Anspruch 6, wenn von Anspruch 2 abhängig, wobei der Vorgang des Haltens der Karkassenhülse (16) mindestens bis zum Abschluss des Vorgangs des Bewegens der ringförmigen Schultern (40) in dem ausgedehnten Zustand axial voneinander weg aufrechterhalten wird.

8. Prozess nach Anspruch 6 oder 7, wobei vor radialem Ausdehnen der ringförmigen Greifelemente (41) die Kopplungselemente (28) von den Wulsten (7) gelöst werden, wobei Lösen der Kopplungselemente (28) von den Wulsten (7) umfasst:
axiales Verschieben der Kopplungselemente (28) von der Karkassenhülse (16) weg, um jeden Greifvorsprung (30) in einer axial äußeren Position von dem jeweiligen Wulst (7) zu positionieren;
radiales Verschieben der Kopplungselemente (28) weg von der Ausrichtungsachse (X-X), um die Greifvorsprünge (30) entsprechend einem minimalen Durchmesser zu positionieren, der größer als ein maximaler Durchmesser der Karkassenhülse (16) ist.

9. Einrichtung zur Herstellung von Reifen für Fahrzeugräder, umfassend:
eine Aufbautrommel (17);
eine Formtrommel (20);
einen Förderer (22), der konfiguriert ist, um eine Karkassenhülse (16) von der Aufbautrommel (17) aufzunehmen und auf der Formtrommel (20) zu platzieren;
wobei der Förderer (22) umfasst:
zwei Greifelemente (23), die gemeinsam nebeneinander und koaxial in Bezug auf eine Ausrichtungsachse (X-X) liegen, wobei jedes Greifelement (23) umfasst:
eine ringförmige Stütze (27);
eine Vielzahl von Kopplungselementen (28), die von der ringförmigen Stütze (27) getragen werden und in Umfangsrichtung um die Ausrichtungsachse (X-X) herum verteilt sind;
wobei jedes Kopplungselement (28) einen Stützschaft (28a), der gleitend mit der ringförmigen Stütze (27) des jeweiligen Greifelements (23) in Eingriff steht, und einen Greifvorsprung (30) aufweist, der axial von dem Stützschaft (28a) in Richtung des anderen Greifelements (23) vorsteht.

10. Einrichtung nach Anspruch 9, wobei jedes Greifelement (23) weiter mindestens ein Stellglied umfasst, das von der ringförmigen Stütze (27) getragen wird und auf eines oder mehrere der Kopplungselemente (28) einwirkt, um sie radial in Bezug auf die Ausrichtungsachse (X-X) zwischen einem zusammengezogenen Zustand und einem ausgedehnten Zustand zu bewegen, wobei das Stellglied einen ersten Zylinder (32), der auf dem Stützschaft (28a) aktiv ist, und einen zusätzlichen Zylinder (34) umfasst, der auf eine Kontrastklammer (35) einwirkt, die starr von der ringförmigen Stütze (27) getragen wird.

11. Einrichtung nach Anspruch 10, wobei der erste Zylinder (32) und der zusätzliche Zylinder (34) mechanisch in Reihe verbunden sind, um das Kopplungselement (28) selektiv im zusammengezogenen Zustand, im ausgedehnten Zustand und in einem Zwischenzustand zwischen dem zusammengezogenen Zustand und dem ausgedehnten Zustand zu positionieren.

12. Einrichtung nach einem oder mehreren der Ansprüche 9 bis 11, wobei der Förderer (22) weiter mindestens eine axiale Bewegungsvorrichtung (25) zum axialen Verschieben der Kopplungselemente (28) der Greifelemente (23) bei gegenseitigem Annähern und Wegbewegen umfasst, wobei die axiale Bewegungsvorrichtung (25) auf die ringförmigen Stützen der Greifelemente (23) einwirkt.

13. Einrichtung nach einem oder mehreren der Ansprüche 9 bis 12, wobei sie weiter radial äußere Rückhalteelemente (36) umfasst, die gemäß einem im Wesentlichen zylindrischen Wirkungsbereich zwischen den Greifelementen (23) verteilt sind und aktivierbar sind, um eine radial äußere Oberfläche der Karkassenhülse (16) zurückzuhalten, wobei die Rückhalteelemente (36) von Armen (37) getragen werden, die von der ringförmigen Stütze (27) jedes Greifelements (23) in Richtung des anderen Greifelements (23) axial überhängen.

14. Einrichtung nach einem oder mehreren der Ansprüche 9 bis 13, wobei die Formtrommel (20) umfasst:
zwei Halbteile (20a), die in Bezug zueinander axial beweglich sind, in denen jede Teilhälfte Folgendes umfasst:
eine radial ausdehnbare ringförmige Schulter (40);
ein radial ausdehnbares ringförmiges Greifelement (41), das in einer axial äußeren Position in Bezug auf die ringförmige Schulter (40) angeordnet ist.

15. Einrichtung nach Anspruch 14, wobei das ringförmige Greifelement (41) jedes Halbteils eine Vielzahl von in Umfangsrichtung verteilten und radial beweglichen Ausdehnungsabschnitten (43) und einen Elastomerring (44) umfasst, der um die Ausdehnungsabschnitte (43) montiert ist und eine radial äußere Druckfläche aufweist.

## Revendications

1. Processus de fabrication de pneus pour roues de véhicule, comprenant les étapes consistant à :
former un manchon de carcasse (16) sur un tambour de confection (17), comprenant au moins une nappe de carcasse présentant des rabats d'extrémité engagés avec des structures de renfort annulaires respectives (7) incorporées dans des talons respectifs ;
récupérer le manchon de carcasse (16) du tambour de confection (17) ;
engager le manchon de carcasse (16) sur un tambour de façonnage (20) ;
façonner de manière toroïdale le manchon de carcasse (16) porté par le tambour de façonnage (20) pour le coupler à un manchon extérieur (18) comprenant une structure de ceinture,
dans lequel la récupération du manchon de carcasse (16) comprend :
la disposition du tambour de confection (17) portant le manchon de carcasse (16) dans une position coaxiale et centrée axialement entre deux éléments de préhension (23) mutuellement côte à côte et coaxiaux par rapport à un axe d'alignement (X-X) dans lequel chaque élément de préhension (23) comprend :
un support annulaire (27) ;
une pluralité d'éléments de couplage (28) portés par le support annulaire (27) et répartis circonférentiellement autour de l'axe d'alignement (X-X) ;
dans lequel chaque élément de couplage (28) présente une tige de support (28a) engagée de manière coulissante avec le support annulaire (27) de l'élément de préhension respectif (23), et une saillie de préhension (30) qui fait saillie axialement à partir de la tige de support (28a) vers l'autre élément de préhension (23) ;
la préhension de chacun des talons (7) du manchon de carcasse (16) au moyen de ladite pluralité d'éléments de couplage (28) portés par chacun des éléments de préhension (23) ;
la contraction du tambour de confection (17) pour le dégager du manchon de carcasse (16) retenu par les éléments de couplage (28).

2. Processus selon la revendication 1, dans lequel, avant de contracter le tambour de confection (17), une action de retenue du manchon de carcasse (16) est effectuée par une action de retenue répartie sur une surface radialement extérieure de celui-ci, ladite action de retenue du manchon de carcasse (16) étant maintenue pendant au moins une partie de l'action d'engagement du manchon de carcasse (16) sur le tambour de façonnage (20).

3. Processus selon une ou plusieurs des revendications précédentes, dans lequel la préhension de chaque talon (7) comprend :
la translation radiale des éléments de couplage (28) de chaque élément de préhension (23) vers ledit axe d'alignement (X-X), pour positionner les saillies de préhension (30) des éléments de couplage eux-mêmes à un diamètre inférieur à un diamètre interne des talons (7) ;
la translation axiale des éléments de couplage (28) vers le manchon de carcasse (16), pour positionner la saillie de préhension (30) de chaque élément de couplage (28) dans une position radialement alignée avec le talon respectif (7) ;
la translation radiale des éléments de couplage (28) à l'écart de l'axe d'alignement (X-X), pour amener la saillie de préhension (30) de chaque élément de couplage (28) contre un bord radialement intérieur du talon respectif (7).

4. Processus selon la revendication 1 ou 2, dans lequel la préhension de chaque talon (7) comprend :
la translation radiale des éléments de couplage (28) de chaque élément de préhension (23) vers ledit axe d'alignement (X-X), pour positionner les saillies de préhension (30) des éléments de couplage (28) eux-mêmes en alignement axial avec une contre-dépouille (S) définie le long d'un bord circonférentiel axialement extérieur du talon respectif (7) ;
la translation axiale des éléments de couplage (28) vers le manchon de carcasse (16), pour positionner la saillie de préhension (30) de chaque élément de couplage (28) en relation d'engagement avec ladite contre-dépouille (S).

5. Processus selon une ou plusieurs des revendications précédentes, dans lequel le tambour de confection (17) est extrait axialement par rapport aux éléments de préhension (23), après l'action de contraction du tambour de confection (17).

6. Processus selon une ou plusieurs des revendications précédentes, dans lequel l'action d'engagement du manchon de carcasse (16) sur le tambour de façonnage (20) comprend :
l'insertion axiale du tambour de façonnage (20) dans une position centrée coaxialement dans le manchon de carcasse (16) retenu par les éléments de préhension (23) ;
l'expansion radiale des épaulements annulaires (40) portés par chacune de deux demi-parties axialement opposées (20a) du tambour de façonnage (20), depuis un état contracté dans lequel un diamètre maximal des épaulements annulaires (40) est inférieur à un diamètre interne des talons (7), jusqu'à un état expansé dans lequel ledit diamètre maximal est supérieur au diamètre interne des talons (7) ;
l'éloignement axial des épaulements annulaires (40) l'un de l'autre dans l'état expansé, pour les amener chacun contre une paroi axialement intérieure de l'un des talons (7) ;
l'expansion radiale des éléments de préhension annulaires (41) portés par chacune de deux demi-parties axialement opposées (20a) du tambour de façonnage (20), depuis un état contracté dans lequel un diamètre maximal des éléments de préhension annulaires (41) est inférieur à un diamètre interne des talons (7), jusqu'à un état expansé dans lequel chaque élément de préhension annulaire (41) fonctionne en relation de poussée radiale contre un bord radialement interne de l'un des talons (7).

7. Processus selon la revendication 6 lorsqu'elle dépend de la revendication 2, dans lequel l'action de retenue du manchon de carcasse (16) est maintenue au moins jusqu'à l'achèvement de l'action d'éloignement axial des épaulements annulaires (40) l'un de l'autre dans l'état expansé.

8. Processus selon la revendication 6 ou 7, dans lequel, avant d'étendre radialement les éléments de préhension annulaires (41), lesdits éléments de couplage (28) sont désengagés des talons (7), dans lequel le désengagement des éléments de couplage (28) des talons (7) comprend :
la translation axiale des éléments de couplage (28) à l'écart du manchon de carcasse (16), pour positionner chaque saillie de préhension (30) dans une position axialement extérieure au talon respectif (7) ;
la translation radiale des éléments de couplage (28) à l'écart de l'axe d'alignement (X-X), pour positionner les saillies de préhension (30) selon un diamètre minimum supérieur à un diamètre maximum du manchon de carcasse (16).

9. Appareil de construction de pneus pour roues de véhicules, comprenant :
un tambour de confection (17) ;
un tambour de façonnage (20) ;
un convoyeur (22) configuré pour récupérer un manchon de carcasse (16) à partir du tambour de confection (17) et le placer sur le tambour de façonnage (20) ;
dans lequel le convoyeur (22) comprend :
deux éléments de préhension (23) mutuellement côte à côte et coaxiaux par rapport à un axe d'alignement (X-X), dans lequel chaque élément de préhension (23) comprend :
un support annulaire (27) ;
une pluralité d'éléments de couplage (28) portés par le support annulaire (27) et répartis circonférentiellement autour de l'axe d'alignement (X-X) ;
dans lequel chaque élément de couplage (28) présente une tige de support (28a) engagée de manière coulissante avec le support annulaire (27) de l'élément de préhension respectif (23), et une saillie de préhension (30) qui fait saillie axialement à partir de la tige de support (28a) vers l'autre élément de préhension (23).

10. Appareil selon la revendication 9, dans lequel chaque élément de préhension (23) comprend en outre au moins un actionneur porté par le support annulaire (27) et agissant sur un ou plusieurs des éléments de couplage (28) pour les déplacer radialement par rapport à l'axe d'alignement (X-X) entre un état contracté et un état expansé, dans lequel ledit actionneur comprend un premier cylindre (32) actif sur la tige de support (28a), et un cylindre supplémentaire (34) agissant contre un support de contraste (35) porté rigidement par le support annulaire (27).

11. Appareil selon la revendication 10, dans lequel le premier cylindre (32) et le cylindre supplémentaire (34) sont reliés mécaniquement en série pour positionner sélectivement l'élément de couplage (28) dans l'état contracté, dans l'état expansé et dans un état intermédiaire entre l'état contracté et l'état expansé.

12. Appareil selon une ou plusieurs des revendications 9 à 11, dans lequel le convoyeur (22) comprend en outre au moins un dispositif de déplacement axial (25) pour translater axialement les éléments de couplage (28) des éléments de préhension (23) en les rapprochant et en les éloignant mutuellement, dans lequel le dispositif de déplacement axial (25) fonctionne sur les supports annulaires des éléments de préhension (23).

13. Appareil selon une ou plusieurs des revendications 9 à 12, dans lequel il comprend en outre des éléments de retenue radialement extérieurs (36), répartis selon une zone d'action sensiblement cylindrique entre les éléments de préhension (23) et activables pour retenir une surface radialement extérieure du manchon de carcasse (16), dans lequel les éléments de retenue (36) sont portés par des bras (37) en surplomb axial du support annulaire (27) de chaque élément de préhension (23), vers l'autre élément de préhension (23).

14. Appareil selon une ou plusieurs des revendications 9 à 13, dans lequel le tambour de façonnage (20) comprend :
deux demi-parties (20a) mobiles axialement l'une par rapport à l'autre dans lesquelles chaque demi-partie comprend :
un épaulement annulaire radialement extensible (40) ;
un élément de préhension annulaire radialement extensible (41), disposé dans une position axialement extérieure par rapport audit épaulement annulaire (40).

15. Appareil selon la revendication 14, dans lequel l'élément de préhension annulaire (41) de chaque demi-partie comprend une pluralité de secteurs d'expansion (43) répartis circonférentiellement et mobiles radialement et une bague élastomère (44) ajustée autour des secteurs d'expansion (43) et présentant une surface de poussée radialement extérieure.
